# FASCICULE DE BREVET EUROPEEN

(11) **EP 1 201 129 B1**
(45) Date de publication et mention de la délivrance du brevet: **28.12.2005**
(21) Numéro de dépôt: 01402683.5
(22) Date de dépôt: 17.10.2001
(51) Int. Cl.: A22C 7/00

(54) **Ensemble de moules de cuisson de produits alimentaires**
Kochformeneinheit für Nahrugsmitteln
Unit of moulds for cooking food products

(30) Priorité: 31.10.2000 FR 0014011
(43) Date de publication de la demande: 02.05.2002
(73) Titulaire: Armor Inox, F-56430 Mauron (FR)
(72) Inventeur: Dreano, Claude, 56430 Mauron (FR)
(74) Mandataire: Geismar, Thierry

(56) Documents cités:
- WO-A-97/34494
- DE-A- 3 315 311
- FR-A- 2 485 884
- FR-A- 2 688 385
- FR-A- 2 731 894
- FR-A- 2 754 677
- FR-A- 2 788 668

## Description

La présente invention concerne un ensemble de moules de cuisson de produits alimentaires tels que des jambons, et plus particulièrement un tel ensemble comportant une pluralité de moules montés sur un cadre de support, chaque moule comprenant une goulotte à section transversale sensiblement en U pour former un fond et deux parois latérales.

On connaît de tels ensembles par exemple par le document FR-A-2.485.884.

Ces ensembles donnent généralement satisfaction. Toutefois, les charcutiers industriels spécialisés dans le jambon en barre pré-tranché constatent des variations de section sur la longueur de la barre. Pour les barres de grande longueur, supérieures à un mètre, ce défaut s'accentue. Ce défaut est lié à une déformation des goulottes dont la rigidité est insuffisante lorsque la longueur est importante.

On connaît également par les documents WO 97/34494 et FR-A-2 731 894 des ensembles selon le préambule de la revendication 1.

Les ensembles selon le premier de ces documents, réalisés d'une seule pièce, présentent toutefois l'inconvénient que les rabats reliés entre eux gênent le passage des fluides calo- ou frigo-porteurs. Il est en outre difficile de réaliser de tels ensembles pliés.

Dans les ensembles selon le deuxième document, la rigidité des parties supérieures des goulottes est obtenue par des entretoises. Toutefois, ces entretoises sont soudées perpendiculairement aux tôles des goulottes, ce qui présente également des difficultés.

La présente invention vise à pallier ces inconvénients.

Plus particulièrement, l'invention a pour but de fournir des ensembles de moules du type rappelé ci-dessus dont les goulottes présentent une rigidité suffisante pour éviter des variations de section de la barre de jambon après sa cuisson, et qui permettent toutefois une bonne circulation des fluides calo- ou frigo-porteurs.

A cet effet, l'invention a pour objet un ensemble de moules de cuisson selon la revendication 1.

On augmente ainsi considérablement la rigidité des goulottes ce qui permet d'éviter leur variation de section lorsqu'elles sont en charge. Par ailleurs, ces échancrures permettent de laisser un libre passage nécessaire à la circulation des fluides calo- ou frigo-porteurs.

Dans un mode de réalisation particulier, les rabats adjacents au cadre sont reliés audit cadre.

Egalement dans un mode de réalisation particulier, lesdits rabats sont pliés sensiblement parallèlement audits cadres.

L'ensemble de moules selon la présente invention peut également comporter en partie inférieure des couvercles destinés à presser les produits contenus dans un autre ensemble situé sous ledit ensemble. Dans ce cas, les bords adjacents de deux couvercles peuvent être reliés entre eux.

Les liaisons entre rabats et cadre peuvent notamment être effectuées par soudure des bords extérieurs desdits rabats.

On peut en outre prévoir des entretoises reliant les parties inférieures des goulottes.

Lesdits couvercles peuvent être fixés auxdites goulottes par l'intermédiaire desdites entretoises.

On décrira maintenant à titre d'exemple non limitatif des modes de réalisation particuliers de l'invention en référence aux dessins schématiques annexés dans lesquels:
- la figure 1 est une vue en perspective partielle d'un ensemble de moules selon la présente invention; et
- les figures 2 à 4 sont des vues en coupe transversale partielle d'ensembles superposés selon trois modes de réalisation différents.

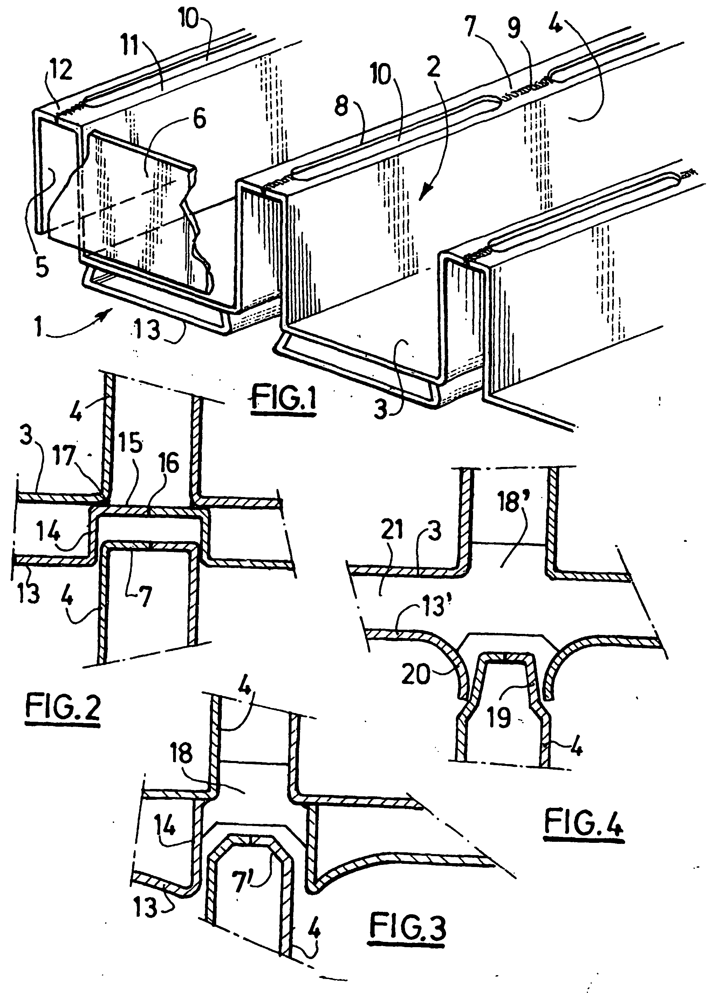

On voit à la figure 1 un ensemble 1 de moules constitués par des goulottes 2 à section transversale en U formant un fond 3 et des parois latérales 4. Les goulottes sont fixées à un cadre rectangulaire formé de deux cornières en L 5 parallèles aux goulottes 2, et de deux parois d'extrémité 6 fermant les goulottes à leurs extrémités.

Des pieds (non représentés) sont soudés aux cornières 5 pour permettre l'empilage d'une pluralité d'ensembles 1.

Les goulottes 1 sont fixées au cadre en premier lieu d'une manière connue par l'intermédiaire de tétons (non représentés) formant saillie à l'extérieur des parois latérales 4 pour pénétrer dans des trous correspondants des plaques d'extrémité 6.

En outre, les bords supérieurs des parois latérales 4 des goulottes 2 sont repliés sensiblement perpendiculairement à ces parois dans un plan généralement perpendiculaire au plan défini par le cadre, pour former des rabats 7. Ces rabats forment des échancrures 8.

Les rabats 7 sont reliés entre les échancrures 8 par des soudures 9 réalisées le long de leur bord. On délimite ainsi des passages thermiques 10 permettant la circulation des fluides calo- ou frigo-porteurs.

En outre, le rabat 11 extérieur de chaque goulotte latérale est soudé de la même manière au bord de l'aile supérieure 12 de la cornière 5 adjacente. Cette cornière est elle-même échancrée de manière à laisser des passages thermiques 10 tels que précédemment.

La figure 1 représente également des couvercles 13 soudés sous le fond 3 de chaque goulotte 2. Ces couvercles sont ici constitués d'une tôle généralement repliée en forme de U dont les bords des ailes sont soudés sur le fond 3.

Lors de la superposition de deux ensembles tels que l'ensemble 1, les couvercles 13 de l'ensemble supérieur pénètrent dans les goulottes 2 de l'ensemble inférieur de manière à assurer le pressage des produits contenus dans ces goulottes.

On voit à la figure 2 une variante de réalisation dans laquelle les ailes 14 des couvercles 13 ont leurs bords supérieurs 15 qui sont eux-mêmes rabattus perpendiculairement comme c'est le cas pour les bords 7 des parois latérales 4 des goulottes. Des échancrures de passage thermique sont également formées.

Les bords des rabats 15 adjacents sont soudés en 16, ce qui contribue également à la rigidité des moules.

L'ensemble constitué par des couvercles 13 est lui-même soudé en 17 à l'ensemble constitué par les goulottes.

Dans le mode de réalisation de la figure 3, les rabats 7' formés à la partie supérieure des parois latérales 4 des goulottes sont repliés deux fois à 45°. En outre, la rigidité de la partie inférieure des ensembles 1 est ici assurée par des entretoises 18 sensiblement perpendiculaires à la direction longitudinale des goulottes, soudées à la fois entre les parois latérales 4 des goulottes et entre les ailes 14 des couvercles.

Dans le mode de réalisation de la figure 4, les parties supérieures des parois latérales 4 des goulottes forment un «soyage» 19 dans lequel viennent s'engager les bords 20 recourbés vers le bas des couvercles 13'. En outre, dans ce mode de réalisation, les entretoises 18' sont prolongées de façon continue 21 sous le fond 3 des goulottes. Des couvercles 20 sont soudés sous ces entretoises 18' qui assurent ainsi la liaison entre les goulottes et les couvercles.

## Revendications

1. Ensemble de moules de cuisson de produits alimentaires tels que des jambons, comportant une pluralité de moules montés sur un cadre de support (5, 6), chaque moule comprenant une goulotte (2) à section transversale généralement en U pour former un fond (3) et deux parois latérales (4), les bords supérieurs des parois latérales (4) formant des rabats (7; 7') pliés, les rabats adjacents des deux goulottes (2) étant reliés entre eux, **caractérisé par le fait Que** les liaisons entre rabat (7; 7') sont effectuées par soudure des bords extérieurs desdits rabats, les bords extérieurs desdits rabats (7; 7') étant découpés de manière à délimiter des échancrures (8 de passage thermiques (10).

2. Ensemble selon la revendication 1, dans lequel les rabats adjacents au cadre sont reliés audit cadre.

3. Ensemble selon l'une quelconque des revendications 1 et 2, dans lequel lesdits rabats (7; 7') sont pliés sensiblement parallèlement audit cadre.

4. Ensemble selon l'une quelconque des revendications 1 à 3, comportant en partie inférieure des couvercles (13; 13') destinés à presser les produits contenus dans un autre ensemble situé sous ledit ensemble, et dans lequel les bords adjacents de deux couvercles sont reliés entre eux.

5. Ensemble selon l'une quelconque des revendications 1 à 4, dans lequel les liaisons entre rabats (7, 7') et cadre (5) sont effectuées par soudure des bords extérieurs desdits rabats.

6. Ensemble selon l'une quelconque des revendications 1 à 5, comprenant des entretoises (18; 18') reliant les parties inférieures des goulottes adjacentes.

7. Ensemble selon l'une quelconque des revendications 4 et 6, dans lequel lesdits couvercles (13') sont fixés auxdites goulottes par l'intermédiaire desdites entretoises (18').

## Patentansprüche

1. Gruppe von Kochformen für Nahrungsmittelprodukte, wie zum Beispiel Schinken, mit einer Vielzahl von Formen, die auf einem Trägerrahmen (5, 6) montiert sind, wobei jede Form eine Ablaufrinne (2) mit einem Querschnitt umfasst, der in der Regel eine U-Form aufweist, um einen Boden (3) zu bilden und zwei Seitenwände (4), wobei die oberen Ränder der Seitenwände (4) Klappen (7; 7') bilden und die benachbarten Klappen der beiden Ablaufrinnen (2) untereinander verbunden sind, durch die Tatsache **gekennzeichnet**, dass die Verbindungen zwischen der Klappe (7; 7') durch eine Schweißnaht an den Außenränder der besagten Klappen erfolgt, wobei die Außenränder der besagten Klappen (7; 7') so abgeschnitten sind, dass sie Wärmedurchführung (10) Ausschnitten (8) begrenze.

2. Gruppe gemäß Anspruch 1, bei der die benachbarten Klappen auf dem Rahmen mit dem besagten Rahmen verbunden sind.

3. Gruppe gemäß einem der Ansprüche 1 und 2, bei der die besagten Klappen (7; 7') deutlich parallel zu dem besagten Rahmen abgekantet sind.

4. Gruppe gemäß einem der Ansprüche 1 bis 3, die auf der Unterseite Deckel (13; 13') umfasst, die dazu bestimmt sind, die Produkte, die in einer anderen Gruppe enthalten sind, die sich unter der besagten Gruppe befindet, zusammenzudrücken und in der die benachbarten Ränder der beiden Deckel untereinander verbunden sind.

5. Gruppe gemäß einem der Ansprüche 1 bis 4, in der die Verbindungen zwischen den Klappen (7; 7') und dem Rahmen (5) durch eine Schweißung der Außenränder der besagten Klappen erfolgt.

6. Gruppe gemäß einem der Ansprüche 1 bis 5, die Zwischenplatten (18; 18') umfasst, die die Unterseiten der benachbarten Ablaufrinnen verbinden.

7. Gruppe gemäß einem der Ansprüche 4 und 6, bei der die besagten Deckel (13') mit Hilfe der besagten Zwischenplatten (18') mit den besagten Ablaufrinnen verbunden sind.

## Claims

1. Set of baking moulds for food products such as hams, comprising a plurality of moulds assembled on a support frame (5, 6), each mould comprising a channel (2) with a generally U-shaped cross-section to form a bottom (3) and two sidewalls (4), the upper edges of the sidewalls (4) forming folded turned edges (7, 7'), the turned edges adjacent to the two channels (2) being connected to each other, **characterised in that** the connections between the turned edges (7, 7') are made by welding the outside edges of the said turned edges, the outside edges of the said turned edges (7, 7') being cut so as to delimit notches (8) forming heat passage (10).

2. Set according to claim 1, in which the turned edges adjacent to the frame are connected to the said frame.

3. Set according to either of claims 1 and 2, in which the said turned edges (7, 7') are folded approximately parallel to the said frame.

4. Set according to any one of claims 1 to 3, comprising covers (13; 13') in the lower part intended to press products contained in another set located under the said set, and in which the adjacent edges of the two covers are connected together.

5. Set according to any one of claims 1 to 4, in which the connections between the turned edges (7, 7') and the frame (5) are made by welding the outside edges of the said turned edges.

6. Set according to any one of claims 1 to 5, comprising spacers (18; 18') connecting the lower parts of adjacent channels.

7. Set according to either of claims 4 and 6, in which the said covers (13') are fixed to the said channels through the said spacers (18').
